# EUROPÄISCHE PATENTSCHRIFT

(11) **EP 2 641 487 B1**
(45) Veröffentlichungstag und Bekanntmachung des Hinweises auf die Patenterteilung: **10.07.2019**
(21) Anmeldenummer: 13159659.5
(22) Anmeldetag: 18.03.2013
(51) Int. Cl.: A24C 5/34, G01N 21/89, G01N 21/952

(54) **Messanordnung zum Messen von Strängen und/oder Strangabschnitten sowie Strangeinheit mit einer solchen Messanordnung und Verfahren zum Messen**
Measuring arrangement to measure rods and/or rod sections and rod maker with such a measuring arrangement and method for measuring
Dispositif de mesure de tiges et/ou de sections de tige ainsi qu'unité de fabrication de tiges dotée d'un tel dispositif de mesure et procédé de mesure

(30) Priorität: 20.03.2012 DE 102012102337
(43) Veröffentlichungstag der Anmeldung: 25.09.2013
(73) Patentinhaber: Hauni Maschinenbau GmbH, 21033 Hamburg (DE)
(72) Erfinder: Giese, Jürgen, 21493 Schwarzenbek (DE); Meins, Karsten, 21481 Lauenburg (DE); Junge, Christian, 21039 Escheburg (DE); Siems, Wolfgang, 22119 Hamburg (DE); Barkhan, Teut, 21465 Wentorf (DE); Buck, Jan, 21365 Adendorf (DE); Knopp, Reiner, 21465 Reinbek (DE)
(74) Vertreter: Stork Bamberger Patentanwälte PartmbB

(56) Entgegenhaltungen:
- EP-A1- 0 937 978
- DE-A1- 3 118 296
- US-A- 3 056 026
- US-A1- 2006 033 919

## Beschreibung

### Beschreibung

Die Erfindung betrifft eine Messanordnung, ausgebildet und eingerichtet zum Messen von in Strangeinheiten der Tabak verarbeitenden Industrie hergestellten und in Förderrichtung F transportierten Strängen und/oder Strangabschnitten, umfassend einen Messkopf mit mindestens einem Messmodul zur Bildung einer Messstrecke, sowie mindestens eine Strangführungseinrichtung zum Führen des mindestens einen Strangs und/oder der Strangabschnitte in der Messanordnung, wobei in dem Messkopf mindestens ein sich in Förderrichtung F durch den gesamten Messkopf und das oder alle Messmodule erstreckender, durchgängiger Strangdurchlaufkanal ausgebildet ist, wobei in dem mindestens einen Strangdurchlaufkanal ein sich mindestens durch das oder alle Messmodule erstreckendes Schutzrohr, in dem der mindestens eine Strang bzw. die Strangabschnitte transportiert werden, angeordnet ist und wobei dem Messkopf mindestens eine Düseneinheit zum Einbringen von in Förderrichtung gerichteter Druckluft in das Schutzrohr zugeordnet ist.

Des Weiteren betrifft die Erfindung eine Strangeinheit zum Herstellen von Strängen und/oder Strangabschnitten der Tabak verarbeitenden Industrie mit einer Messanordnung.

Die Erfindung betrifft auch ein Verfahren zum Messen von in Strangeinheiten der Tabak verarbeitenden Industrie hergestellten und in Förderrichtung F transportierten Strängen und/oder Strangabschnitten, umfassend die Schritte: Transportieren mindestens eines Strangs bzw. der Strangabschnitte durch einen Strangdurchlaufkanal eines Messkopfes in einer Messanordnung nach einem der Ansprüche 1 bis 12, wobei der Transport innerhalb des Messkopfes bzw. des Strangdurchlaufkanals in einem Schutzrohr erfolgt, Messen mindestens einer physikalischen Größe des mindestens einen Strangs bzw. der Strangabschnitte mittels der Messanordnung während des Transports durch den Messkopf, Führen des mindestens einen Strangs bzw. der Strangabschnitte während des Messens innerhalb des Messkopfes durch mindestens eine Strangführungseinrichtung, wobei mittels einer Düseneinheit in Förderrichtung F gerichtete Druckluft in das Schutzrohr eingebracht wird, derart, dass der mindestens eine Strang bzw. die Strangabschnitte während des Transports durch den Messkopf innerhalb des Schutzrohres von Druckluft umgeben ist bzw. sind.

Solche Messanordnungen und Strangeinheiten, die wiederum üblicherweise Bestandteil einer Strangmaschine sind, sind aus dem Stand der Technik bekannt. Die Messanordnungen können jedoch auch als Einzeleinrichtung, beispielsweise in so genannten externen Messtürmen für Offline-Qualitätsprüfungen, eingesetzt werden. Bevorzugt sind diese Messanordnungen Bestandteil der Strangmaschine. Die Messanordnungen dienen dazu, die in der als Einzelstrang- oder Mehrstrang-Strangmaschine hergestellten Stränge oder Strangabschnitte aus Tabak, Filtermaterial oder anderen zur Herstellung von (Filter-)Zigaretten, Zigarillos oder dergleichen geeigneten Materialien und Materialmischungen bezüglich ausgewählter Parameter, rein beispielhaft sind die Dichte, die Feuchte, der Durchmesser, das Vorhandensein von Fremdkörpern sowie das Vorhandensein von Verschmutzungen zu nennen, zu untersuchen bzw. zu bestimmen. Dazu werden die wahlweise umhüllten oder umhüllungsfreien Stränge als Endlosstrang oder als vom Endlosstrang in einfacher oder mehrfacher Gebrauchslänge abgetrennte Strangabschnitte kontinuierlich durch die Messanordnung transportiert. Beim Transport durch die Messanordnung erfolgt durch die Messmodule das Aufnehmen der Messdaten, die üblicherweise an eine Auswerteeinheit weitergeleitet werden, so dass ein Online-Messverfahren durchgeführt werden kann.

Die Stränge und Strangabschnitte aus Tabak, Filtermaterial oder dergleichen sowie aus Mischungen aus den vorgenannten Materialien bestehen üblicherweise aus einzelnen Fasern und Faserabschnitten. Die Stränge bzw. Strangabschnitte werden mit hoher Geschwindigkeit durch einen Strangdurchlaufkanal der Messanordnung transportiert, vorzugsweise geschoben. Dabei werden Faserteilchen bzw. Schmutzpartikel durch die Stränge bzw. Strangabschnitte in den Strangdurchlaufkanal hineingezogen, wobei sich die Schmutzpartikel im Strangdurchlaufkanal und in den Messmodulen absetzen. Insbesondere bei Messanordnungen, die mehrere hintereinander angeordnete Messmodule aufweisen, führen die Übergänge im Strangdurchlaufkanal beispielsweise beim Einbringen von Reinigungsluft zu Luftwirbeln, die wiederum die Schmutzablagerungen verstärken. Die Reinigung insbesondere der Messmodule bzw. der darin befindlichen Sensoren ist sehr aufwendig und erfordert unterschiedliche Hilfsmittel.

Es wird im Stand der Technik zur Reduzierung der genannten Problematik versucht, die Luftführung innerhalb des Strangdurchkaufkanals zu optimieren, um Luftwirbel innerhalb des Strangdurchlaufkanals zu reduzieren. Des Weiteren werden die Messmodule bzw. die entsprechenden Sensoren individuell konstruiert und kombiniert. Diese Maßnahmen sind aber ebenfalls sehr aufwendig und führen auch nicht zu befriedigenden Ergebnissen.

Eine Messanordnung mit den Merkmalen des Oberbegriffes des Anspruches 1 ist aus der EP 0 937 978 A bekannt. Die US 2006/0033919 A beschreibt ein Messverfahren mit den Merkmalen des Oberbegriffes des Anspruches 15.

Der Erfindung liegt demnach die Aufgabe zugrunde, eine einfach zu reinigende Messanordnung zu schaffen. Die Aufgabe besteht weiterhin darin, eine entsprechende Strangeinheit sowie ein Messverfahren vorzuschlagen.

Diese Aufgabe wird durch eine Messanordnung mit den eingangs genannten Merkmalen dadurch gelöst, dass das Schutzrohr als Wechseleinheit lösbar an dem Messkopf befestigt ist, und dass dem Messkopf mindestens eine Düseneinheit zum Einbringen von in Förderrichtung F gerichteter Druckluft in das Schutzrohr zugeordnet ist. Damit wird für die Messanordnung ein einfaches und wirksames Reinigungs- und Reinhaltekonzept bereitgestellt. Das durchgängige und zu Wechselzwecken entnehmbare Schutzrohr trennt zum einen den Prozessraum, in dem die Stränge bzw. Strangabschnitte transportiert werden, vom Messraum der Messmodule, wodurch die Messmodule mit ihren Sensoren geschützt sind. Mit anderen Worten bildet das Schutzrohr eine mechanische Abschirmung zwischen den Strängen bzw. Strangabschnitten auf der einen Seite und den Sensoren der Messmodule auf der anderen Seite. Zum anderen verhindert das Schutzrohr die Bildung von Verwirbelungen und unterstützt eine laminare Strömung der in Förderrichtung F strömenden Druckluft. Des Weiteren können nicht vermeidbare Verschmutzungen und/oder Ablagerungen durch einfaches Austauschen des Schutzrohres beseitigt werden. Mittels der in Förderrichtung F einbringbaren Druckluft durch die Düseneinheit werden die Schmutzpartikel in Förderrichtung F aus dem Schutzrohr ausgeblasen. Die in Förderrichtung F strömende Druckluft bildet weiterhin ein Luftpolster zwischen den Strängen bzw. Strangabschnitten einerseits und dem Schutzrohr andererseits.

Eine zweckmäßige Weiterbildung der Erfindung zeichnet sich dadurch aus, dass das oder sämtliche Messmodule in einem Gehäuse angeordnet sind, wobei das Schutzrohr eingangsseitig und ausgangsseitig gegenüber dem oder den Messmodulen am Gehäuse abgedichtet ist. Dadurch wird wirksam verhindert, dass Schmutzpartikel über den Eintrittsbereich und den Austrittsbereich zu den Messmodulen und genauer an die Sensoren gelangen.

Vorteilhafterweise ist die Düseneinheit zum Einbringen der in Förderrichtung F gerichteten Druckluft in das Schutzrohr in Förderrichtung F unmittelbar vor dem Schutzrohr angeordnet, derart, dass die Druckluft übergangslos aus der Düseneinheit parallel zu dem mindestens einen Strang bzw. den Strangabschnitten in das Schutzrohr strömt. Die parallel zu den Strängen bzw. Strangabschnitten strömende Druckluft, vorzugsweise durch eine Ringdüse erzeugt, kann durch die erfindungsgemäße Ausbildung quasi verwirbelungsfrei in das Schutzrohr eingebracht werden, wodurch das Absetzen und die Ablagerung von Schmutzpartikeln im Schutzrohr verhindert bzw. zumindest erschwert und die Ausbildung einer laminaren Strömung zum Austragen der Schmutzpartikel aus de Schutzrohr unterstützt wird.

Eine bevorzugte Ausführungsform der Erfindung ist dadurch gekennzeichnet, dass das Schutzrohr über die gesamte Länge einen konstanten Außendurchmesser D_{A} und einen konstanten Innendurchmesser Di aufweist. Damit wird das Strömungsverhalten der Druckluft in dem Schutzrohr optimiert.

Vorzugsweise sind das oder sämtliche Messmodule in einem Gehäuse angeordnet, wobei das Schutzrohr zweiteilig ausgebildet und anteilig eingangsseitig und ausgangsseitig jeweils gegenüber dem oder den Messmodulen am Gehäuse abgedichtet ist. Durch die Zweiteiligkeit des Schutzrohres kann dieses in einzelnen Elementen zu beiden Seiten des Strangdurchlaufkanals entnommen werden. Mit anderen Worten kann ein Rohrabschnitt in Förderrichtung F und der andere Rohrabschnitt entgegen der Förderrichtung F aus dem Strangdurchlaufkanal herausgezogen werden.

Weiter bevorzugt sind das oder sämtliche Messmodule in einem Gehäuse angeordnet, wobei das Schutzrohr mehrteilig mit form- und/oder kraftschlüssig verbundenen Rohrabschnitten ausgebildet und jeweils an den Verbindungsstellen der Rohrabschnitte gegenüber dem oder den Messmodulen am Gehäuse abgedichtet ist. Durch die mehrteilige Ausbildung des Schutzrohres, also die Unterteilung in mehr als zwei Rohrabschnitte, können die einzelnen Rohrabschnitte insbesondere bezüglich des Materials an die entsprechende Messfunktion angepasst werden, wobei die Rohrabschnitte den jeweiligen Messmodulen zugeordnet sind. Durch die form- und/oder kraftschlüssige Verbindung der einzelnen Rohrabschnitte kann das Schutzrohr trotz der Mehreiligkeit als Ganzes aus dem Strangdurchlaufkanal herausgezogen werden.

Zweckmäßigerweise ist das Schutzrohr aus einem amorphen, transparenten Kunststoff, vorzugsweise Cyclo-Olefin-(Co)Polymere (COP/COC), hergestellt. Als optische Kunststoffe werden insbesondere amorphe und damit transparente Werkstoffe bezeichnet, die sich neben der hohen Transparenz (Lichtdurchlässigkeit) des Weiteren durch eine hohe Steifigkeit, Festigkeit, Härte sowie niedrige Dichte auszeichnen. Mit anderen Worten ist durch die Materialauswahl ein transparentes, verzugsfreies und wärmebeständiges Schutzrohr geschaffen, so dass die Stränge bzw. Strangabschnitte trotz des sie umgebenden Schutzrohres mittels der Messmodule mit u.a. mit optischen Sensoren, Mikrowellentechnologie sowie anderen Messfunktionen präzise geprüft werden können.

Eine vorteilhafte Ausgestaltung sieht vor, dass in Förderrichtung F vor der Düseneinheit zum Einbringen der in Förderrichtung F gerichteten Druckluft in das Schutzrohr ein Sperrelement zum eingangsseitigen Schließen des Strangdurchlaufkanals angeordnet ist. Durch das Sperrelement kann der Strangdurchlaufkanal einseitig geschlossen werden, nämlich eingangsseitig, so dass die in Förderrichtung F einströmende Druckluft als Transportluft mit gegenüber der Reinigungsluft höheren Drücken z.B. bei einem Strangbruch im Schutzrohr verbleibende Strangreste ausblasen kann. Bevorzugt ist das Druckniveau der Transport- oder Ausblasluft bei eingangsseitig abgesperrtem Strangdurchlaufkanal etwa um den Faktor 2 bis 5 höher als das Druckniveau der Reinigungsluft während des Produktionsbetriebs mit beidseitig geöffnetem Strangdurchlaufkanal.

Vorteilhafterweise ist das Sperrelement durch ein Trennmittel einer Trenneinrichtung zum Durchtrennen des Strangs gebildet. Durch die Doppelfunktion des Trennmittels wird eine besonders einfache und kompakte Möglichkeit geschaffen, den Strang in Strangabschnitte zu trennen bzw. im Falle eines Strangbruchs den Strang zu unterbrechen und gleichzeitig den Strangdurchlaufkanal für das Ausblasen des im Schutzrohr befindlichen Strangrests zu schließen.

In einer besonders bevorzugten Weiterbildung der Erfindung ist dem Messkopf eingangsseitig und in Förderrichtung F vor dem Sperrelement mindestens eine Düseneinheit zum Aufbringen von entgegen der Förderrichtung F gerichteter Druckluft zugeordnet, wobei diese Druckluft parallel zum Strang geführt und/oder gerichtet ist. Durch das Aufbringen der Gegenluft, vorzugsweise mittels einer Ringdüse, wird der Eintrag von Schmutzpartikeln in den Strangdurchlaufkanal verhindert. Anders ausgedrückt wird der Schmutzeintrag im Eintrittsbereich des Messkopfes vermieden.

Zweckmäßigerweise ist wahlweise im Eintrittsbereich E und/oder im Austrittsbereich A und/oder zwischen Eintrittsbereich E und Austrittsbereich A des oder jedes Strangs und/oder Strangabschnitts in den Messkopf bzw. aus dem Messkopf heraus eine Strangführungseinrichtung angeordnet, wobei jede Strangführungseinrichtung als radial verstellbare Mehrpunktlagerung ausgebildet ist. Jede Strangführungseinrichtung stellt sicher, dass die Stränge bzw. Strangabschnitte während der Messung durch die Messmodule exakt geführt sind, wobei die Ausbildung als radial verstellbare Mehrpunktlagerung dafür sorgt, dass die Strangführungseinrichtung an unterschiedliche Formate, also unterschiedliche Durchmesser der Stränge bzw. Strangabschnitte, angepasst werden kann.

In einer bevorzugten Ausgestaltung der Erfindung umfasst der Messkopf mehrere Messmodule und sämtliche Messmodule sind in einem gemeinsamen Gehäuse des Messkopfes angeordnet, wobei die Messmodule über elektrische und/oder pneumatische Steckverbindungen auf einen die Bodenplatte des Gehäuses bildenden und mehrere Steckplätze bereitstellenden Modulträger mit freier Steckplatzwahl steckbar sind. Diese bevorzugte Ausführungsform ermöglicht es auf einfache Weise, unterschiedliche Konfigurationen der Messanordnung zu erreichen. Die standardisierte und modulare Bauweise der Messanordnung ermöglicht nämlich eine freie und strangunabhängige Konfiguration. Unterschiedliche Messfunktionen sind durch die freie Steckplatzwahl frei kombinierbar und erweiterbar, wobei das auswechselbare Schutzrohr mit den genannten Eigenschaften diese Modularität unterstützt.

Die Aufgabe wird auch durch eine eingangs genannte Strangeinheit dadurch gelöst, dass die Messanordnung nach einem der Ansprüche 1 bis 12 ausgebildet ist. Die sich daraus ergebenden Vorteile wurden bereits im Zusammenhang mit der Messanordnung beschrieben, weshalb zur Vermeidung von Wiederholungen auf die entsprechenden Passagen verwiesen wird.

Vorzugsweise umfasst die Strangeinheit eine pneumatische Steuereinheit, wobei die pneumatische Steuereinheit ein Druckminderventil und/oder ein Drosselelement zum Bereitstellen von Druckluft mit wenigstens zwei verschiedenen Druckniveaus aufweist, welche über die Düseneinheit in das Schutzrohr einbringbar sind. Dadurch ist es auf besonders einfache Weise möglich, zwischen dem eigentlichen Produktionsbetrieb mit einem ersten Druckniveau einerseits und dem Reinigungsbetrieb mit einem zweiten Druckniveau andererseits umzuschalten.

Die Aufgabe wird auch durch das eingangs genannte Verfahren mit folgenden Schritten gelöst: das Druckniveau und die Druckluftmenge der Druckluft werden derart gesteuert, dass die Druckluftgeschwindigkeit der Transportgeschwindigkeit des mindestens einen Strangs bzw. der Strangabschnitte entspricht.

Vorzugsweise wird bei Unterbrechung des Produktionsbetriebes der Strangdurchlaufkanal eingangsseitig durch ein in Förderrichtung F vor der Düseneinheit zum Einbringen der in Förderrichtung F gerichteten Druckluft in das Schutzrohr angeordnetes Sperrelement geschlossen, und das Druckniveau wird nach dem eingangsseitigen Schließen des Strangdurchlaufkanals gegenüber dem Druckniveau während des Produktionsbetriebes um den Faktor von etwa 2 bis 5 angehoben. Dadurch wird das Ausstoßen des innerhalb des Strangdurchlaufkanals befindlichen Abschnittes des Strangs erleichtert. Anders ausgedrückt kann zu Transportzwecken ein gegenüber dem Produktionsbetrieb höheres Druckniveau aufgebaut werden.

Weitere zweckmäßige und/oder vorteilhafte Merkmale und Weiterbildungen der Erfindung ergeben sich aus den Unteransprüchen und der Beschreibung. Eine besonders bevorzugte Ausführungsform sowie das Verfahren werden anhand der beigefügten Zeichnung näher erläutert. In der Zeichnung zeigt:
- Fig. 1: eine schematische Darstellung einer Messanordnung im Schnitt,

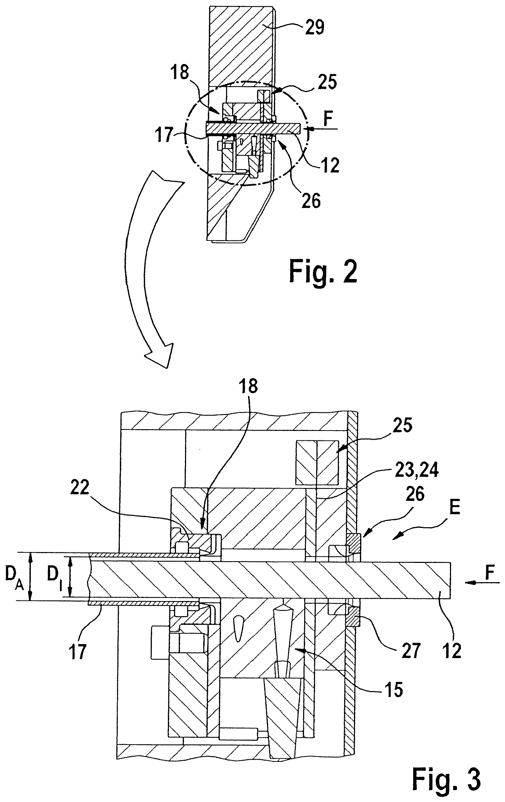

- Fig. 2: eine schematische Darstellung eines eingangsseitig des Messkopfes angeordneten Moduls mit einer Trenneinrichtung, Düseneinheiten zum Einbringen von in Förderrichtung F gerichteter Druckluft und zum Aufbringen von entgegen der Förderrichtung F gerichteter Druckluft sowie mit einer Strangführungseinrichtung,
- Fig.3: eine stark vergrößerte Darstellung des in der Figur 2 markierten Ausschnitts, und
- Fig. 4: eine Strangmaschine mit einer Messanordnung.

Die in der Zeichnung dargestellte Messanordnung dient zum Messen eines Tabakstrangs. Selbstverständlich umfasst die Erfindung auch Messanordnungen für einen Doppelstrang oder mehr als zwei Stränge. Auch ist die erfindungsgemäße Messanordnung nicht auf das Messen von Tabaksträngen beschränkt. Vielmehr können auch Filterstränge oder Stränge und Strangabschnitte aus anderen Materialien bzw. Materialmischungen der Tabak verarbeitenden Industrie, wie beispielsweise Multisegmentfilterstränge, mittels der erfindungsgemäßen Messanordnung gemessen werden.

Die Erfindung betrifft eine Messanordnung 10, die zum Messen von in Strangeinheiten 11 der Tabak verarbeitenden Industrie hergestellten und in Förderrichtung F transportierten Strängen 12 bzw. Strangabschnitten, die von einem Strang 12 abgetrennt sind und hintereinanderliegend wieder einen Strang 12 bilden, ausgebildet und eingerichtet ist. Die Messanordnung 10 umfasst einen Messkopf 13 mit mindestens einem Messmodul 14. Das Messmodul 14 oder die Messmodule 14 bilden eine Messstrecke, die sich in Förderrichtung F des oder jedes Strangs 12 erstreckt. Die Messanordnung 10 umfasst weiterhin mindestens eine Strangführungseinrichtung 15 zum Führen des Strangs 12 und/oder der Strangabschnitte in der Messanordnung 10. In dem Messkopf 13 ist mindesten ein sich in Förderrichtung F durch den gesamten Messkopf 13 und das oder alle Messmodule 14 erstreckender, durchgängiger Strangdurchlaufkanal 16 ausgebildet. In dem Strangdurchlaufkanal 16 ist ein sich mindestens durch das oder alle Messmodule 14 erstreckendes Schutzrohr 17, in dem die Stränge 12 bzw. Strangabschnitte transportiert werden, angeordnet.

Erfindungsgemäß ist das Schutzrohr als Wechseleinheit lösbar an dem Messkopf 13 befestigt, und dem Messkopf 13 ist mindestens eine Düseneinheit 18 zum Einbringen von in Förderrichtung F gerichteter Druckluft in das Schutzrohr 17 zugeordnet. Das bedeutet, dass die Stränge 12 bzw. Strangabschnitte zumindest im Bereich der Messmodule 14 innerhalb des Schutzrohres 17 transportiert werden, so dass eine mechanische Trennung zwischen dem Prozessraum und dem Messraum hergestellt ist. Die Düseneinheit 18 zum Einbringen der Druckluft in Förderrichtung F ist entsprechend im Eintrittsbereich E des oder jedes Strangs 12 bzw. Strangabschnitts in den Messkopf 13 angeordnet.

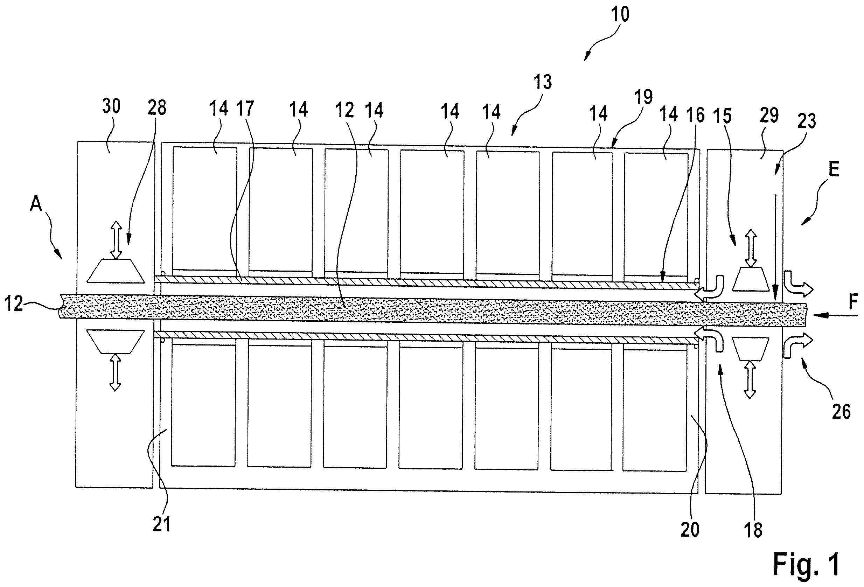

In der Figur 1 ist beispielhaft eine Messanordnung 10 gezeigt, die sieben Messmodule 14 umfasst. Die Anzahl der Messmodule 14 sowie die Anzahl nebeneinander angeordneter bzw. ausgebildeter Messstrecken können selbstverständlich variieren. Sämtliche Messmodule 14 sind in einem, vorzugsweise gemeinsamen Gehäuse 19 angeordnet. Das Schutzrohr 17, das vorzugsweise transparent ausgebildet ist, erstreckt sich in Förderrichtung F von einer im Eintrittsbereich E liegenden Seitenwand 20 des Gehäuses 19 zu einer im Austrittsbereich A liegenden Seitenwand 21 des Gehäuses 19. Das Schutzrohr 17 ist eingangsseitig und ausgangsseitig gegenüber den Messmodulen 14 am Gehäuse 19 abgedichtet. Eine einfache Abdichtung kann z.B. durch einen O-Ring erreicht werden. Andere Dichtmittel sind aber ebenfalls einsetzbar. Damit ist der sich über alle Messmodule 14 erstreckende, durchgängige Prozessraum des Schutzrohres 17, in dem die Stränge 12 bzw. Strangabschnitte transportiert werden, von dem Messraum der Messmodule 14 vollständig getrennt bzw. entkoppelt. Optional könnte auch der Messraum bzw. könnten die Messräume der Messmodule 14 gegenüber dem Schutzrohr 17 abgedichtet sein. In weiteren nicht explizit dargestellten Ausführungsformen kann das Schutzrohr 17 auch zweiteilig oder mehrteilig ausgebildet sein. Bei einer Zwei- oder Mehrteiligkeit des Schutzrohres 17 sind die Rohrabschnitte anteilig bzw. jeweils an den Verbindungsstellen der Rohrabschnitte gegenüber den Messmodulen 14 am Gehäuse 19 abgedichtet. Sämtliche Schutzrohre 17 können als Ganzes aus dem Strangdurchlaufkanal 16 herausgezogen werden. Insbesondere bei der mehrteiligen Ausführungsform des Schutzrohres 17 sind die einzelnen Rohrabschnitte mittels Formschluss und/oder Kraftschluss z.B. über Klemm-, Klick, oder Schraubverbindungen miteinander verbunden. Dies gilt jedoch in gleicher Weise für die zweiteilige Ausführung. Insbesondere die zweiteilige Ausführung kann jedoch auch aus zwei nicht miteinander verbundenen Rohrabschnitten bestehen, so dass das Entfernen der beiden Rohrabschnitte aus dem Strangdurchlaufkanal 16 in entgegen gesetzter Richtung erfolgt. Bei den zwei- oder mehrteiligen Schutzrohren 17 können die einzelnen Rohrabschnitte aus unterschiedlichen Materialien und/oder aus Materialien mit unterschiedlichen Eigenschaften bestehen, um an die unterschiedlichen Messfunktionen angepasst zu sein.

Die Düseneinheit 18 zum Einbringen der in Förderrichtung F gerichteten Druckluft in das Schutzrohr 17 ist in Förderrichtung F unmittelbar vor dem Schutzrohr 17 angeordnet. Die Düseneinheit 18 umfasst bevorzugt eine Ringdüse 22, die um den Strang 12 herum einen ringförmigen Druckluftstrom legt. Der Innendurchmesser der Ringdüse 22 ist maximal so groß wie der Innendurchmesser des Schutzrohres 17 und bevorzugt geringfügig kleiner ausgebildet. Das Schutzrohr 17 schließt sich quasi direkt und übergangslos an die Ringsdüse 22 an, derart, dass die Druckluft übergangslos, also ohne gegen einen Absatz zu prallen, aus der Düseneinheit 18 parallel zu den Strängen 12 bzw. Strangabschnitten in das Schutzrohr 17 strömt. Das Schutzrohr 17 selbst kann eine konische Form bzw. genauer einen konisch verlaufenden Innendurchmesser, vorzugsweise in Förderrichtung F divergierend, aufweisen. Bevorzugt weist das Schutzrohr 17 jedoch einen über die gesamte Länge konstanten Außendurchmesser D_{A} und Innendurchmesser D_{I} auf. Selbstverständlich kann ein Schutzrohr 17 mit dem Außendurchmesser D_{A} und einem Innendurchmesser D_{I1} gegen ein Schutzrohr mit demselben Außendurchmesser D_{A} und einem Innendurchmesser D_{I2} mit D_{I1} ≠ D_{I2} ausgetauscht werden, wodurch das Schutzrohr 17 bzw. die Messanordnung 10 an ein anderes Format, also einen anderen Strangdurchmesser, angepasst werden kann.

Das Schutzrohr 17 ist bevorzugt aus einem optischen Kunststoff hergestellt. Als besonders geeignet hat sich ein Schutzrohr 17 aus Cyclo-Olefin-(Co)Polymere (kurz COC bzw. COP) herausgestellt, da sich dieser Kunststoff ganz besonders für den Einsatz in einer Messanordnung 10 mit unterschiedlichen Messfunktionen und somit unterschiedlichen Anforderungen an das die Stränge 12 bzw. Strangabschnitte gegenüber den Sensoren der Messmodule 14 abschirmende Schutzrohr 17 eignet. Neben den Kunststoffen COC und COP können z.B. auch Polysulfon (kurz PSU) oder Polymethylmethacrylat (kurz PMMA) und verwandte Kunststoffe oder Kunststoffe mit zu den zuvor genannten Werkstoffen vergleichbaren Materialeigenschaften für die Herstellung des Schutzrohres 17 verwendet werden.

Der Messanordnung 10 ist in Förderrichtung F vor der Düseneinheit 18 zum Einbringen der in Förderrichtung F gerichteten Druckluft in das Schutzrohr 17 ein Sperrelement 23 zum eingangseitigen Schließen des Strangdurchlaufkanals 16 zugeordnet. Das Sperrelement 23 kann einen einfachen Schieber oder dergleichen umfassen, der aus einer den Strangdurchlaufkanal 16 freigebenden Warteposition in eine den Strangdurchlaufkanal 16 verschließende Arbeitsposition und umgekehrt bewegbar ist. Bevorzugt ist das Sperrelement 23 aber durch ein Trennmittel 24 einer Trenneinrichtung 25 zum Trennen des Strangs 12 in einzelne Strangabschnitte gebildet. Die Trenneinrichtung 25 kann einerseits dazu dienen, den Strang 12 in einzelne Strangabschnitte zu trennen. Das Trennmittel 24 der Trenneinrichtung 25 kann andererseits aber auch die Strangförderung in Förderrichtung F unterbrechen, beispielsweise bei einem Strangbruch im Schutzrohr 17. Dazu ist das Trennmittel 24 in die Arbeitsposition bewegbar, und zwar unter Trennung des Strangs 12 und des sich im Schutzrohr 17 befindlichen Strangrests. Dem Messkopf 13 ist eingangsseitig und in Förderrichtung F vor dem Sperrelement 23 mindestens eine Düseneinheit 26 zum Aufbringen von entgegen der Förderrichtung F gerichteter Druckluft zugeordnet. Bevorzugt umfasst die Düseneinheit 26 eine Ringdüse 27, die um den Strang 12 herum einen ringförmigen Druckluftstrom legt, so dass die Druckluft parallel zum Strang 12 bzw. Strangabschnitt geführt und/oder gerichtet ist. Die Ringdüse 27 weitet sich entgegen der Förderrichtung F ausgangsseitig auf. Anders ausgedrückt ist der grundsätzlich zylindrische Strömungskanal der Ringdüse 27 im äußeren Randbereich trichterförmig aufgeweitet. Die Düseneinheit 26 mit dem Düsenring 27 bildet in Förderichtung F die vorderste Komponente der Messanordnung 10, so dass die Schmutzpartikel die Messanordnung 10 bzw. den Strangdurchlaufkanal 16 bei anliegender Druckluft gar nicht erst erreichen.

Beide Düseneinheiten 18, 26 können an ein gemeinsames Druckluftsystem angeschlossen sein. Bevorzugt sind die beiden Düseneinheiten 18, 26 jedoch getrennt steuerbar und/oder regelbar. Anders ausgedrückt können die einzelnen Druckluftströme der Düseneinheiten 18, 26 eine unterschiedliche Druckhöhe aufweisen. Die Düseneinheit 18 zum Einbringen der Druckluft in das Schutzrohr 17 in Förderrichtung F kann z.B. zu Reinigungszwecken einen Druckwert von etwa 1,5 bis 2,5 bar und bevorzugt von 1,7 bis 2,0 bar aufweisen. Zu Transportzwecken, beispielsweise wenn nach einem Strangbruch ein im Schutzrohr 17 befindlicher Strangrest ausgeblasen werden muss, kann der Druckwert etwa 5,5 bis 6,5 bar und bevorzugt 6 bar betragen. Der höhere Druckwert von größer 2,5 bar sollte aber nur dann angelegt werden, wenn der Strangdurchlaufkanal 16 eingangsseitig geschlossen ist, also wenn sich das Sperrelement 23 in der Arbeitsposition befindet. Die Düseneinheit 26 zum Aufbringen der Druckluft entgegen der Förderrichtung F kann zu Reinigungszwecken einen Druckwert von etwa 1,5 bis 2,5 bar und bevorzugt von 1,7 bis 2,0 bar aufweisen. Jedoch können die beispielhaft angegebenen Druckwerte auch außerhalb der genannten Grenzen variieren, wenn das Prüfverfahren dies erfordert, beispielsweise bei einer vertikalen Anordnung in einem Messturm.

Bei der in Figur 1 dargestellten Ausführungsform der Messanordnung 10 ist dieser bevorzugt eingangseitig und ausgangsseitig jeweils eine Strangführungseinrichtung 15, 28 zugeordnet. Mit anderen Worten ist im Eintrittbereich E und im Austrittsbereich A des oder jedes Strangs 12 und/oder Strangabschnitts in den Messkopf 13 bzw. aus dem Messkopf 13 heraus eine Strangführungseinrichtung 15, 28 vorgesehen. Jede der Strangführungseinrichtungen 15, 28 ist bevorzugt als radial verstellbare Mehrpunktlagerung, beispielsweise als Dreibackenfutter, ausgebildet. Die Strangführungseinrichtungen 15, 28 können in dem Gehäuse 19 des Messkopfes 13 integriert sein. Bevorzugt sind die Strangführungseinrichtungen 15, 28 in einem separaten Modul 29, 30 angeordnet, wobei die Module 29, 30 lösbar am Gehäuse 19 des Messkopfes 13 befestigt sind. In dem eingangsseitig angeordneten Modul 29 sind bevorzugt zusätzlich zur Strangführungseinrichtung 15 auch die Düseneinheiten 18, 26 sowie die Trenneinrichtung 25 angeordnet. Die Strangführungseinrichtung 15 ist dabei zwischen der Trenneinrichtung 25 und der Düseneinheit 18 zum Einbringen der Druckluft in das Schutzrohr 17 in Förderrichtung F angeordnet. Das Modul 29 kann aber auch in das Gehäuse 19 integriert oder integraler Bestandteil des Gehäuses 19 sein. Das Modul 30, das die ausgangsseitige Strangführungseinrichtung 28 beinhaltet, kann ebenfalls in das Gehäuse 19 integriert oder integraler Bestandteil des Gehäuses 19 sein. Es besteht auch die Möglichkeit, dass zwischen dem Eintrittsbereich E und dem Austrittsbereich A mindestens eine Strangführungseinrichtung angeordnet ist. Diese Ausführungsform ist insbesondere bei einem zweiteiligen Schutzrohr 17 eingesetzt, um zusätzlich zu den Strangführungseinrichtungen im Eintrittsbereich E und dem Austrittsbereich A im Bereich der Nahtstelle des Schutzrohres 17 eine weitere Strangführungseinrichtung vorzusehen, wobei sämtliche Strangführungseinrichtungen im Wesentlichen den gleichen Aufbau aufweisen.

In nicht dargestellten Ausführungsbeispielen umfasst die Messanordnung 10 eine Auswerteeinheit. An diese Auswerteeinheit sind die Messmodule 14 über Leitungen angeschlossen. Sämtliche Messmodule 14 sind bevorzugt in dem gemeinsamen Gehäuse 19 angeordnet, wobei die Messmodule 14 über elektrische und/oder pneumatische Steckverbindungen auf einen an der Bodenplatte des Gehäuses 19 befestigten und mehrere Steckplätze bereitstellenden Modulträger mit freier Steckplatzwahl steckbar sind. Das Gehäuse 19 des Messkopfes 13 weist bevorzugt einen klappbaren Deckel auf. Beispielsweise ist der Deckel mittels mindestens eines Scharniers klappbar, um nach dem Ziehen des Schutzrohres 17 als Ganzes oder in Einzelteilen die Messmodule 14 einfach nach oben aus dem Gehäuse 19 entnehmen zu können.

Die Erfindung wurde vorstehend anhand eines Einzelstrangs erläutert. Die Erfindung betrifft aber auch Messanordnungen 10, bei denen zwei oder mehr in Förderrichtung F parallel verlaufende Messstrecken mit zwei oder mehr parallel verlaufenden Schutzrohren 17 in einem gemeinsamen Gehäuse 19 vorgesehen sind.

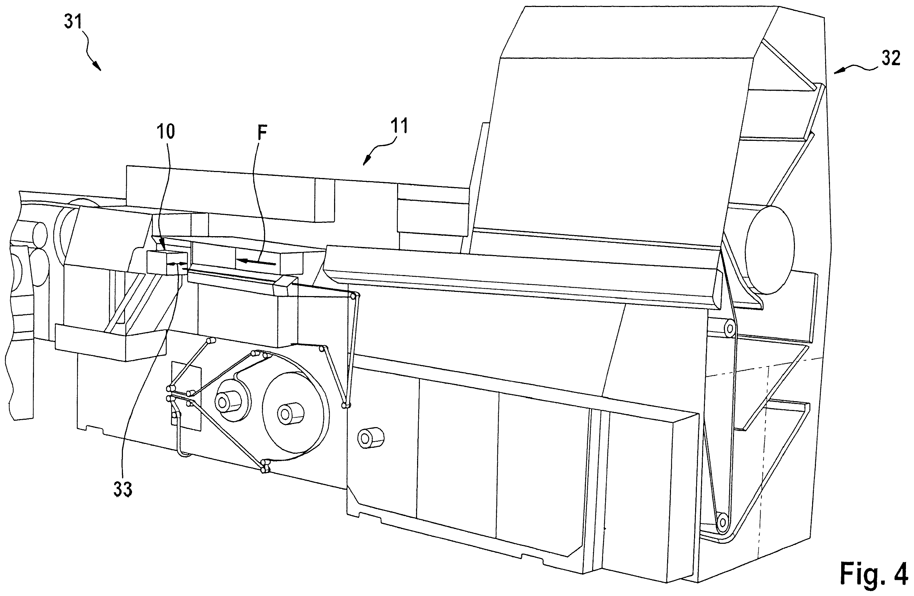

In der Figur 4 ist schematisch eine Strangmaschine 31 gezeigt, die eine Strangeinheit 11 mit einer Messanordnung 10 umfasst. Die Strangeinheit 11 ist üblicherweise Bestandteil der Strangmaschine 31, zu der bei einer Ausbildung als Tabakstrangmaschine eine Verteilereinheit 32 und bei einer Ausbildung als Filterstrangmaschine eine Filtertow-Aufbereitungseinheit gehören. Solche Strangmaschinen 31 und Strangeinheiten 11 sind hinlänglich bekannt, weshalb auf deine detaillierte Beschreibung verzichtet wird. Die erfindungsgemäße Strangeinheit 11 zeichnet sich nun dadurch aus, dass die zuvor beschriebene Messanordnung 10 in die Strangeinheit 11 und damit in die Produktion integriert ist, so dass eine Online-Messung durchgeführt werden kann. Vorzugsweise ist die Messanordnung 10 quer zur Förderrichtung F aus einer Arbeitsposition in eine Wartungsposition (siehe Pfeil 33) und umgekehrt bewegbar. Diese Bewegbarkeit kann z.B. durch ein Führungsschienensystem realisiert sein.

## Patentansprüche

1. Messanordnung (10), ausgebildet und eingerichtet zum Messen von in Strangeinheiten (11) der Tabak verarbeitenden Industrie hergestellten und in Förderrichtung F transportierten Strängen (12) und/oder Strangabschnitten, umfassend einen Messkopf (13) mit mindestens einem Messmodul (14) zur Bildung einer Messstrecke, sowie mindestens eine Strangführungseinrichtung (15) zum Führen des mindestens einen Strangs (12) und/oder der Strangabschnitte in der Messanordnung (10), wobei in dem Messkopf (13) mindestens ein sich in Förderrichtung F durch den gesamten Messkopf (13) und das oder alle Messmodule (14) erstreckender, durchgängiger Strangdurchlaufkanal (16) ausgebildet ist, wobei in dem mindestens einen Strangdurchlaufkanal (16) ein sich mindestens durch das oder alle Messmodule (14) erstreckendes Schutzrohr (17), in dem der mindestens eine Strang (12) bzw. die Strangabschnitte transportiert werden, angeordnet ist, und wobei dem Messkopf (13) mindestens eine Düseneinheit (18) zum Einbringen von in Förderrichtung F gerichteter Druckluft in das Schutzrohr (17) zugeordnet ist, **dadurch gekennzeichnet, dass** das Schutzrohr (17) als Wechseleinheit lösbar an dem Messkopf (13) befestigt ist.

2. Messanordnung nach Anspruch 1, **dadurch gekennzeichnet, dass** das oder sämtliche Messmodule (14) in einem Gehäuse (19) angeordnet sind, wobei das Schutzrohr (17) eingangsseitig und ausgangsseitig gegenüber dem oder den Messmodulen (14) am Gehäuse (19) abgedichtet ist.

3. Messanordnung nach Anspruch 1 oder 2, **dadurch gekennzeichnet, dass** die Düseneinheit (18) zum Einbringen der in Förderrichtung F gerichteten Druckluft in das Schutzrohr (17) in Förderrichtung F unmittelbar vor dem Schutzrohr (17) angeordnet ist, derart, dass die Druckluft übergangslos aus der Düseneinheit (18) parallel zu dem mindestens einen Strang (12) bzw. den Strangabschnitten in das Schutzrohr (17) strömt.

4. Messanordnung nach einem der Ansprüche 1 bis 3, **dadurch gekennzeichnet, dass** das Schutzrohr (17) über die gesamte Länge einen konstanten Außendurchmesser D_{A} und einen konstanten Innendurchmesser D_{I} aufweist.

5. Messanordnung nach Anspruch 1, **dadurch gekennzeichnet, dass** das oder sämtliche Messmodule (14) in einem Gehäuse (19) angeordnet sind, wobei das Schutzrohr (17) zweiteilig ausgebildet und anteilig eingangsseitig und ausgangsseitig jeweils gegenüber dem oder den Messmodulen (14) am Gehäuse (19) abgedichtet ist.

6. Messanordnung nach Anspruch 1, **dadurch gekennzeichnet, dass** das oder sämtliche Messmodule (14) in einem Gehäuse (19) angeordnet sind, wobei das Schutzrohr (17) mehrteilig mit form- und/oder kraftschlüssig verbundenen Rohrabschnitten ausgebildet und jeweils an den Verbindungsstellen der Rohrabschnitte gegenüber dem oder den Messmodulen (14) am Gehäuse (19) abgedichtet ist.

7. Messanordnung nach einem der Ansprüche 1 bis 6, **dadurch gekennzeichnet, dass** das Schutzrohr (17) aus einem amorphen, transparenten Kunststoff, vorzugsweise Cyclo-Olefin-(Co)Polymere (COP/COC), hergestellt ist.

8. Messanordnung nach einem der Ansprüche 1 bis 7, **dadurch gekennzeichnet, dass** in Förderrichtung F vor der Düseneinheit (18) zum Einbringen der in Förderrichtung F gerichteten Druckluft in das Schutzrohr (17) ein Sperrelement (23) zum eingangsseitigen Schließen des Strangdurchlaufkanals (16) angeordnet ist.

9. Messanordnung nach Anspruch 8, **dadurch gekennzeichnet, dass** das Sperrelement (23) durch ein Trennmittel (24) einer Trenneinrichtung (25) zum Durchtrennen des Strangs (12) gebildet ist.

10. Messanordnung nach Anspruch 8 oder 9, **dadurch gekennzeichnet, dass** dem Messkopf (13) eingangsseitig und in Förderrichtung F vor dem Sperrelement (23) mindestens eine Düseneinheit (26) zum Aufbringen von entgegen der Förderrichtung F gerichteter Druckluft zugeordnet ist, wobei diese Druckluft parallel zum Strang (12) geführt und/oder gerichtet ist.

11. Messanordnung nach einem der Ansprüche 1 bis 10, **dadurch gekennzeichnet, dass** wahlweise im Eintrittsbereich E und/oder im Austrittsbereich A und/oder zwischen Eintrittsbereich E und Austrittsbereich A des oder jedes Strangs (12) und/oder Strangabschnitts in den Messkopf (13) bzw. aus dem Messkopf (13) heraus eine Strangführungseinrichtung (15, 28) angeordnet ist, wobei jede Strangführungseinrichtung (15, 28) als radial verstellbare Mehrpunktlagerung ausgebildet ist.

12. Messanordnung nach einem der Ansprüche 1 bis 11, **dadurch gekennzeichnet, dass** der Messkopf (13) mehrere Messmodule (14) umfasst und dass sämtliche Messmodule (14) in einem gemeinsamen Gehäuse (19) des Messkopfes (13) angeordnet sind, wobei die Messmodule (14) über elektrische und/oder pneumatische Steckverbindungen auf einen die Bodenplatte des Gehäuses bildenden und mehrere Steckplätze bereitstellenden Modulträger mit freier Steckplatzwahl steckbar sind.

13. Strangeinheit (11) zum Herstellen von Strängen (12) und/oder Strangabschnitten der Tabak verarbeitenden Industrie mit einer Messanordnung (10) nach einem der Ansprüche 1 bis 12.

14. Strangeinheit nach Anspruch 13, **dadurch gekennzeichnet, dass** die Strangeinheit eine pneumatische Steuereinheit umfasst, wobei die pneumatische Steuereinheit ein Druckminderventil und/oder ein Drosselelement zum Bereitstellen von Druckluft mit wenigstens zwei verschiedenen Druckniveaus aufweist, welche über die Düseneinheit (18) in das Schutzrohr (17) einbringbar sind.

15. Verfahren zum Messen von in Strangeinheiten (11) der Tabak verarbeitenden Industrie hergestellten und in Förderichtung F transportierten Strängen (12) und/oder Strangabschnitten, umfassend die folgenden Schritte:
- Transportieren mindestens eines Strangs (12) bzw. der Strangabschnitte durch einen Strangdurchlaufkanal (16) eines Messkopfes (13) in einer Messanordnung (10) nach einem der Ansprüche 1 bis 12, wobei der Transport innerhalb des Messkopfes (13) bzw. des Strangdurchlaufkanals (16) in einem Schutzrohr (17) erfolgt,
- Messen mindestens einer physikalischen Größe des mindestens einen Strangs (12) bzw. der Strangabschnitte mittels der Messanordnung (10) während des Transports durch den Messkopf (13),
- Führen des mindestens einen Strangs (12) bzw. der Strangabschnitte während des Messens innerhalb des Messkopfes (13) durch mindestens eine Strangführungseinrichtung (15),
- wobei mittels einer Düseneinheit (18) in Förderrichtung F gerichtete Druckluft in das Schutzrohr (17) eingebracht wird, derart, dass der mindestens eine Strang (12) bzw. die Strangabschnitte während des Transports durch den Messkopf (13) innerhalb des Schutzrohres (17) von Druckluft umgeben ist bzw. sind,
- **dadurch gekennzeichnet, dass** das Druckniveau und die Druckluftmenge der Druckluft derart gesteuert werden, dass die Druckluftgeschwindigkeit der Transportgeschwindigkeit des mindestens einen Strangs (12) bzw. der Strangabschnitte entspricht.

16. Verfahren nach Anspruch 15, **dadurch gekennzeichnet, dass** bei Unterbrechung des Produktionsbetriebes der Strangdurchlaufkanal (16) eingangsseitig durch ein in Förderrichtung F vor der Düseneinheit (18) zum Einbringen der in Förderrichtung F gerichteten Druckluft in das Schutzrohr (17) angeordnetes Sperrelement (23) geschlossen wird, und dass das Druckniveau nach dem eingangsseitigen Schließen des Strangdurchlaufkanals (16) gegenüber dem Druckniveau während des Produktionsbetriebes um den Faktor von etwa 2 bis 5 angehoben wird.

## Claims

1. Measuring arrangement (10), formed and configured for measuring rods (12) and/or rod sections produced in rod units (11) of the tobacco-processing industry and transported in conveying direction F, comprising a measuring head (13) with at least one measuring module (14) for the formation of a measuring section, as well as at least one rod guide apparatus (15) for guidance of the at least one rod (12) and/or the rod sections in the measuring arrangement (10), wherein at least one continuous rod throughflow channel (16) extending in conveying direction F through the entire measuring head (13) and the or all measuring modules (14) is formed in the measuring head (13), wherein a protective pipe (17) which extends at least through the or all measuring modules (14) and in which the at least one rod (12) or the rod sections are transported is arranged in the at least one rod throughflow channel (16), and wherein at least one nozzle unit (18) for the introduction of compressed air directed in conveying direction F into the protective pipe (17) is assigned to the measuring head (13), **characterised in that** the protective pipe (17) is fastened as an exchangeable unit detachably to the measuring head (13).

2. Measuring arrangement according to Claim 1, **characterised in that** the or all measuring modules (14) are arranged in a housing (19), wherein the protective pipe (17) is sealed off on the input side and output side with respect to the measuring modules (14) on the housing (19).

3. Measuring arrangement according to Claim 1 or 2, **characterised in that** the nozzle unit (18) for the introduction of compressed air directed in conveying direction F into the protective pipe (17) is arranged directly in front of the protective pipe (17) in conveying direction F in such a manner that the compressed air flows smoothly from the nozzle unit (18) parallel to the at least one rod (12) or the rod sections into the protective pipe (17).

4. Measuring arrangement according to any one of Claims 1 to 3, **characterised in that** the protective pipe (17) has a constant outer diameter D_{A} and a constant inner diameter D_{I} across the entire length.

5. Measuring arrangement according to Claim 1, **characterised in that** the or all measuring modules (14) are arranged in a housing (19), wherein the protective pipe (17) is formed in two pieces and is proportionally sealed off on the input side and output side in each case with respect to the measuring modules (14) on the housing (19).

6. Measuring arrangement according to Claim 1, **characterised in that** the or all measuring modules (14) are arranged in a housing (19), wherein the protective pipe (17) is formed in several parts with pipe sections connected in a positive-locking and/or non-positive manner and is sealed off in each case at the connection points of the pipe sections with respect to the measuring modules (14) on the housing (19).

7. Measuring arrangement according to any one of Claims 1 to 6, **characterised in that** the protective pipe (17) is produced from an amorphous, transparent plastic, preferably cyclo-olefin-(co)polymers (COP/COC).

8. Measuring arrangement according to any one of Claims 1 to 7, **characterised in that** a locking element (23) for input-side closing of the rod throughflow channel (16) is arranged in front of the nozzle unit (18) in conveying direction F for the introduction of the compressed air directed in conveying direction F into the protective pipe (17).

9. Measuring arrangement according to Claim 8, **characterised in that** the locking element (23) is formed by a separating means (24) of a separating apparatus (25) for separating the rod (12).

10. Measuring arrangement according to Claim 8 or 9, **characterised in that** at least one nozzle unit (26) for the application of compressed air directed counter to conveying direction F is assigned to the measuring head (13) on the input side and in conveying direction F in front of the locking element (23), wherein this compressed air is guided and/or directed parallel to the rod (12).

11. Measuring arrangement according to any one of Claims 1 to 10, **characterised in that** a rod guide apparatus (15, 28) is arranged optionally in inlet region E and/or in outlet region A and/or between inlet region E and outlet region A of the or each rod (12) and/or rod section into the measuring head (13) or out of the measuring head (13), wherein each rod guide apparatus (15, 28) is formed as a radially adjustable multi-point bearing.

12. Measuring arrangement according to any one of Claims 1 to 11, **characterised in that** the measuring head (13) comprises several measuring modules (14) and that all of the measuring modules (14) are arranged in a joint housing (19) of the measuring head (13), wherein the measuring modules (14) can be plugged via electric and/or pneumatic plug-in connections onto a module carrier, which forms the baseplate of the housing and provides several slots, with free slot selection.

13. Rod unit (11) for producing rods (12) and/or rod sections of the tobacco-processing industry with a measuring arrangement (10) according to any one of Claims 1 to 12.

14. Rod unit according to Claim 13, **characterised in that** the rod unit comprises a pneumatic control unit, wherein the pneumatic control unit has a pressure reducing valve and/or a throttle element for providing compressed air with at least two different pressure levels which can be introduced via the nozzle unit (18) into the protective pipe (17).

15. Method for measuring rods (12) and/or rod sections produced in rod units (11) of the tobacco-processing industry and transported in conveying direction F, comprising the following steps:
- transporting at least one rod (12) or the rod sections through a rod throughflow channel (16) of a measuring head (13) in a measuring arrangement (10) according to any one of Claims 1 to 12, wherein transport is carried out within the measuring head (13) or the rod throughflow channel (16) in a protective pipe (17),
- measuring at least one physical variable of the at least one rod (12) or the rod sections by means of the measuring arrangement (10) during transport through the measuring head (13),
- guiding the at least one rod (12) or rod sections during measurement within the measuring head (13) by at least one rod guide apparatus (15),
- wherein compressed air directed in conveying direction F by means of a nozzle unit (18) is introduced into the protective pipe (17) in such a manner that the at least one rod (12) or the rod sections is or are surrounded by compressed air during transport through the measuring head (13) within the protective pipe (17),
- **characterised in that** the pressure level and the compressed air quantity of the compressed air are controlled in such a manner that the compressed air speed corresponds to the transport speed of the at least one rod (12) or the rod sections.

16. Method according to Claim 15, **characterised in that**, in the case of interruption of the production operation, the rod throughflow channel (16) is closed on the input side by a locking element (23) arranged in front of the nozzle unit (18) in conveying direction F for the introduction of the compressed air directed in conveying direction F into the protective pipe (17), and that the pressure level is increased by a factor of approximately 2 to 5 after the input-side closing of the rod throughflow channel (16) in comparison with the pressure level during production operation.

## Revendications

1. Agencement de mesure (10), réalisé et mis au point pour mesurer des boudins (12) et/ou sections de boudin produit(e)s dans des unités de formation de boudin (11) de l'industrie de transformation du tabac, et transporté(e)s dans le sens de transport F, comprenant une tête de mesure (13) dotée d'au moins un module de mesure (14) destiné à constituer un tronçon de mesure, ainsi qu'au moins un dispositif de guidage du boudin (15) destiné à guider ledit au moins un boudin (12) et/ou les sections de boudin dans l'agencement de mesure (10), au moins un canal de transit du boudin (16) continu, qui s'étend dans le sens de transport F au travers de toute la tête de mesure (13) et du ou de tous les modules de mesure (14), étant réalisé dans la tête de mesure (13), étant agencé dans ledit au moins un canal de transit du boudin (16) un tube protecteur (17) qui s'étend au moins au travers du ou de tous les modules de mesure (14) et dans lequel est/sont transporté(es) ledit au moins un boudin (12) ou les sections de boudin, et au moins une unité à buses (18) étant associée à la tête de mesure (13) pour introduire de l'air comprimé, dirigé dans le sens de transport F, dans le tube protecteur (17), **caractérisé en ce que** le tube protecteur (17) est fixé à la tête de mesure (13) de manière détachable en tant qu'unité de changement.

2. Agencement de mesure selon la revendication 1, **caractérisé en ce que** le ou la totalité des modules de mesure (14) sont agencés dans un boîtier (19), le tube protecteur (17) étant obturé de manière hermétique du côté de l'admission et de la sortie par rapport au ou aux modules de mesure (14) du boîtier (19).

3. Agencement de mesure selon la revendication 1 ou 2, **caractérisé en ce que** l'unité à buses (18) destinée à introduire dans le tube protecteur (17) l'air comprimé dirigé dans le sens de transport F est agencée, dans le sens de transport F, directement avant le tube protecteur (17), de sorte que l'air comprimé passe sans transition de l'unité à buses (18) au tube protecteur (17) parallèlement audit au moins un boudin (12) ou aux sections de boudin.

4. Agencement de mesure selon l'une quelconque des revendications 1 à 3, **caractérisé en ce que** le tube protecteur (17) présente sur toute sa longueur un diamètre extérieur constant D_{A} et un diamètre intérieur constant Di.

5. Agencement de mesure selon la revendication 1, **caractérisé en ce que** le ou la totalité des modules de mesure (14) sont agencés dans un boîtier (19), le tube protecteur (17) étant réalisé en deux parties et obturé de manière hermétique et proportionnelle du côté de l'admission et de la sortie à chaque fois par rapport au ou aux modules de mesure (14) du boîtier (19).

6. Agencement de mesure selon la revendication 1, **caractérisé en ce que** le ou la totalité des modules de mesure (14) sont agencés dans un boîtier (19), le tube protecteur (17) étant réalisé en plusieurs parties avec des sections de tube solidarisées par complémentarité de forme et/ou par frottement, et obturé de manière hermétique à chaque point de solidarisation des sections de tubes, par rapport au ou aux modules de mesure (14) du boîtier (19).

7. Agencement de mesure selon l'une quelconque des revendications 1 à 6, **caractérisé en ce que** le tube protecteur (17) est fabriqué en matière plastique amorphe et transparente, de préférence en (co)polymère de cyclo oléfine (COP/COC).

8. Agencement de mesure selon l'une quelconque des revendications 1 à 7, **caractérisé en ce qu'**un élément d'arrêt (23), destiné à fermer le canal de transit du boudin (16) du côté de l'admission est agencé, dans le sens de transport F, avant l'unité à buses (18) destinée à introduire dans le tube protecteur (17) l'air comprimé dirigé dans le sens de transport F.

9. Agencement de mesure selon la revendication 8, **caractérisé en ce que** l'élément d'arrêt (23) est conçu pour sectionner le boudin (12) par un moyen de sectionnement (24) d'un dispositif sectionneur (25).

10. Agencement de mesure selon la revendication 8 ou 9, **caractérisé en ce qu'**au moins une unité à buses (26), destinée à appliquer de l'air comprimé dirigé dans le sens inverse du sens de transport F, est associée à la tête de mesure (13) du côté de l'admission et, dans le sens de transport F, avant l'élément d'arrêt (23), ledit air comprimé étant guidé et/ou dirigé parallèlement au boudin (12).

11. Agencement de mesure selon l'une quelconque des revendications 1 à 10, **caractérisé en ce qu'**un dispositif de guidage du boudin (15, 28) dans la tête de mesure (13) ou de sortie de la tête de mesure (13) est agencé au choix dans la zone d'admission E et/ou dans la zone de sortie A et/ou entre la zone d'admission E et la zone de sortie A du ou de chaque boudin (12) et/ou section de boudin, chaque dispositif de guidage du boudin (15, 28) étant réalisé en tant que palier multipoint réglable dans le sens radial.

12. Agencement de mesure selon l'une quelconque des revendications 1 à 11, **caractérisé en ce que** la tête de mesure (13) comprend plusieurs modules de mesure (14) et que la totalité des modules de mesure (14) sont agencés dans un boîtier (19) commun de la tête de mesure (13), les modules de mesure (14) étant enfichables à un emplacement au choix, via des connecteurs électriques et/ou pneumatiques, sur un support modulaire constituant la plaque de fond du boîtier et fournissant plusieurs emplacements d'enfichage.

13. Unité de formation de boudin (11) destinée à la production de boudins (12) et/ou de sections de boudin de l'industrie de transformation du tabac, dotée d'un agencement de mesure (10) selon l'une quelconque des revendications 1 à 12.

14. Unité de formation de boudin selon la revendication 13, **caractérisée en ce que** l'unité de formation de boudin comprend un organe de commande pneumatique, l'organe de commande pneumatique présentant une vanne de détente et/ou un élément d'étranglement pour fournir de l'air comprimé à au moins deux niveaux de pression différents qui sont susceptibles d'être introduits dans le tube protecteur (17) via l'unité à buses (18).

15. Procédé de mesure de boudins (12) et/ou de sections de boudin produit(e)s dans des unités de formation de boudin (11) de l'industrie de transformation du tabac et transporté(e)s dans le sens de transport F, comprenant les étapes suivantes :
- transport d'au moins un boudin (12) ou des sections de boudin par un canal de transit du boudin (16) d'une tête de mesure (13) dans un agencement de mesure (10) selon l'une quelconque des revendications 1 à 12, le transport s'effectuant dans un tube protecteur (17) à l'intérieur de la tête de mesure (13) ou du canal de transit du boudin (16) ;
- mesure d'au moins une grandeur physique dudit au moins un boudin (12) ou des sections de boudin au moyen de l'agencement de mesure (10) au cours du transport par la tête de mesure (13) ;
- guidage dudit au moins un boudin (12) ou des sections de boudin au cours de la mesure à l'intérieur de la tête de mesure (13) par au moins un dispositif de guidage du boudin (15) ;
- de l'air comprimé dirigé dans le sens de transport F étant introduit dans le tube protecteur (17) au moyen d'une unité à buses (18) de sorte que ledit au moins un boudin (12) ou les sections de boudin est ou sont entouré(es) d'air comprimé à l'intérieur du tube protecteur (17) au cours du transport par la tête de mesure (13) ;
- **caractérisé en ce que** le niveau de pression et la quantité d'air comprimé sont commandés de sorte que la vitesse de l'air comprimé correspond à la vitesse de transport dudit au moins un boudin (12) ou des sections de boudin.

16. Procédé selon la revendication 15, **caractérisé en ce que** lors d'une interruption du mode de production, le canal de transit du boudin (16) est fermé du côté de l'admission par un élément d'arrêt (23) agencé, dans le sens de transport F, avant l'unité à buses (18) destinée à introduire dans le tube protecteur (17) l'air comprimé dirigé dans le sens de transport F, et qu'après que le canal de transit du boudin (16) a été fermé du côté de l'admission, le niveau de pression est augmenté du facteur d'environ 2 à 5 par rapport au niveau de pression au cours du mode de production.
